# EUROPEAN PATENT APPLICATION

(11) **EP 4 488 236 A1**
(43) Date of publication of application: **08.01.2025**
(21) Application number: 23183984.6
(22) Date of filing: 06.07.2023
(51) Int. Cl.: C02F 1/00, C02F 11/123

(54) **A PLANT FOR INCREASING THE DRY SUBSTANCE CONTENT OF A FLOWABLE MEDIUM AND A METHOD FOR MONITORING THE PERFORMANCE OF THE PLANT**

(71) Applicant: Seepex GmbH, 46240 Bottrop (DE)
(72) Inventor: McGARIAN, Peter, BA228PD Tintinhull, Somerset (GB)
(74) Representative: Andrejewski - Honke Patent- und Rechtsanwälte Partnerschaft mbB

(57) **Abstract**

The invention relates to a plant for increasing the dry substance content of a flowable medium (S), for example sludge, the plant comprising
- a thickener (1) for thickening the medium (S),
- a feed pump (2) for feeding the medium (S) to the thickener (1),
- a discharge pump (3) for discharging the thickened medium (T) from the thickener (1),
- a discharge hopper (4) at the inlet of the discharge pump (3) or between the thickener (1) and the discharge pump (3), and
- a monitoring device for monitoring the performance of the plant,

the monitoring device comprising at least a feed flow meter (10) for measuring the feed flow rate from the feed pump (2) to the thickener (1) and
the monitoring device further comprising
- means for measuring the time taken to empty the hopper (4) from a first upper-level to a second lower level during operation of the discharge pump (3) and/or the time taken to fill the hopper (4) from a second lower level to a first upper level (e.g. off time of the discharge pump), and
- means (18) for calculating the discharge flow rate of the thickener (1) using the measured time and the discharge volume of the hopper (4).

## Description

The invention relates to a plant for increasing the dry substance content (and therefore volume reduction) of a flowable medium, for example sludge, the plant comprising
- a thickener for thickening (e.g. dewatering) the medium,
- a feed pump for feeding the medium to the thickener and
- a discharge pump for discharging the thickened/dewatered medium from the thickener.

Sludge thickening is an important process or process step in wastewater treatment. Increasing the dry substance content (DS) of the medium, for example sludge, results in a volume reduction due to withdrawal of water or other liquids which reduces the load of the sludge on downstream processes and in particular during transport of the sludge.

The thickener is preferably a mechanical thickening device, e.g. a gravity belt thickeners (GBT) which is well known and widely used for increasing the solid concentration and therefore thickening the sludge by allowing the water or other liquid to drain from the sludge under gravity through a permeable medium, for example a moving belt or screening belt on which the sludge is transported through the gravity belt thickener. In the GBT, the dry substance content is increased along the length of the belt as water drains through it and the thickened sludge is forming a layer on the belt. The belt is for example a continuously circulating belt which is designed as a screen belt. The thickened sludge falls off the end of the upper belt surface. However, other types of thickeners, may be used, e.g. a drum thickener or a screw press.

The flowable medium is transported to the thickener by a feed pump and the thickened sludge is discharged with the discharge pump at the outlet of the thickener.

The feed pump and/or the discharge pump is/are preferably designed as progressive cavity pump(s). A progressive cavity pump is a pump from the group of rotary positive displacement pumps, which are used in a wide-range of industrial sectors for conveying different media, and in particular liquid media with solid components, for example sludge. The progressive cavity pump comprises at least a stator, a rotor rotating in the stator, a drive for the rotor and for example a pump housing connected to the stator which, depending on the mode of operation, is also designated as suction housing and which has at least a housing opening or inlet opening for the medium to be conveyed. The drive, for example an electric motor, operates on a centrally rotating shaft, which may be a drive shaft or a so-called plug-in shaft. The rotating shaft operates via a coupling device, for example a coupling rod, on the rotor or its rotor head, which rotates eccentrically, so that the eccentricity is generated or insured by means of the coupling device or coupling rod. The stator of the progressive cavity pump generally consists of an elastic material and may be enclosed or encased by a one-piece or multi-piece stator casing or stator housing, which may be from metal or the like. Progressive cavity pumps are preferable used within the inventive plant as a feed pump and/or discharge pump, but generally other conveying means or pumps may be used alternatively, e.g. lobe pumps or peristaltic pumps.

Reduction of the volume of the medium/sludge by increasing of the dry substance content of medium/sludge within for example wastewater treatment is of great economical importance as the increase in the dry substance content generally directly results in the saving of costs, for example during transport of the sludge. Typical dry substance content is for example in the region of 2,5 %.(in weight). Any malfunction of the plant or for example the thickener may result in a reduction of the thickening efficiency and therefore in an increase of costs.

It is therefore an object of the invention to provide a plant for improved increasing the dry substance content of a flowable medium, for example sludge, and in particular a plant with optimised monitoring of the performance of the plant.

Moreover it is an object of the invention to provide an improved method for monitoring the performance of a plant for increasing the dry substance content of a flowable medium, for example sludge.

To achieve this object, the invention relates to a plant as defined in claim 1 and a method as defined in claim 15.

According to a first aspect, the invention relates to a plant for increasing the dry substance content of a flowable medium, for example sludge, the plant comprising
- a thickener for thickening (e.g. dewatering) the medium,
- a feed pump for feeding the medium to the thickener,
- a discharge pump for discharging the thickened/dewatered medium from the thickener,
- a discharge hopper at the inlet of the discharge pump or between the thickener and the discharge pump, and
- a monitoring device for monitoring the performance of the plant (e.g. for monitoring the performance of one or more components of the plant),

the monitoring device comprising at least a feed flow meter for measuring the feed flowrate from the feed pump to the thickener and
the monitoring device further comprising
   - means for measuring the time taken to (fully or partly) empty the hopper from a first upper level to a second lower level during operation of the discharge pump and/or the time to fill the hopper from the second lower level to the first upper level (during off time of the discharge pump), and/or
   - means for calculating the discharge flow rate of the thickener using the measured time and the discharge volume of the hopper.

The invention is based on the idea of improving the performance of a plant for increasing the dry substance content and in particular the performance of a thickener of the plant by using the pumps within the plant for monitoring without the need for additional sensors. In particular no additional flow meter is necessary at the discharge end of the thickener or in the region of the discharge pump as the pump flow can be calculated by the time taken to fill the hopper and/or the time taken to empty the discharge hopper between the thickener and the pump.

Taking into account that generally an inlet flow meter is used between the feed pump and the thickener, no additional flow meter is needed at the outlet of the thickener in order to determine the volume reduction of the medium (e.g. sludge) and therefore the increase of the dry substance content of the medium. The sludge volume reduction can be calculated by the measured flow from the inlet flow meter fitted to the sludge feed pump compared to the calculated flow for the discharge pump.

In order to determine the time for (fully or partly) filling and/or emptying the hopper the means for measuring the time preferably comprise one or more detection devices for detecting the first upper level and the second lower level of the medium within the hopper. The detection devices are for example one or more level probes or level sensors, for example a first level probe in the upper region of the hopper and a second level probe in the lower region of the hopper. As an alternative radar devices, ultrasonic devices or pressure devices can be used as detection devices. Knowing the geometry of the hopper and therefore the volume of the hopper it is easily possible to determine the flowrate at the outlet of the thickener, e.g. with an evaluating algorithm. Since the feed pump generally is running during the measurement and therefore continuously (re)fills the hopper, it is appropriate to take the feed of the hopper during time measurement into account in the calculation, using the evaluating algorithm.

Preferably a feed line (feed conduit) is arranged between the feed pump and the thickener and the feed flow meter is for example adapted to or integrated in this feed line. Moreover a discharge line (conduit) can be connected to the outlet of the discharge pump and preferably a discharge pressure meter for measuring the discharge pressure is adapted to or integrated in the discharge line.

The invention preferably also uses the known concept of injecting a conditioning medium, for example a polymer, into the thickener or preferably into the feed line between the feed pump and the thickener. Therefore an additional pump, designated as conditioning pump, can be used in order to provide the conditioning medium, for example a polymer, to the feed line via a conditioning line which is for example arranged between the conditioning pump and the feed line. The conditioning medium is injected into the sludge feed line in order to optimise the thickening process by flocculation of the sludge with the polymer. The polymer is for example injected via an injection ring situated in the sludge feed line having one or more hoses. During practical use it is possible that the hoses block which reduces the sludge conditioning and therefore the effectiveness of thickening which results in a lower dry substance content as the thin sludge flows over the belt. In this case the discharge pump must handle more capacity which means that it has to run longer for emptying the discharge hopper. In this regard, the invention is based on the idea that measurement of the discharge time and/or the time taken to fill the hopper can be used to monitor any failure during polymer injection and in particular blockage of the hoses within the injection ring. Therefore appropriate action can be taken, for example cleaning or replacement of the hoses. In order to optimise these considerations a flow meter within the conditioning line can be used and/or a pressure meter/gauge within the conditioning line can be used. Taking into account measurement data from one or more of these sensors in combination with the measurement of the time taken to fill and empty the hopper it is possible to locate problems within the feeding mechanism of the conditioning medium, for example the polymer.

Moreover the invention preferably uses the known principle of supplying a washing medium, for example wash water, to the thickener in order to clean components of the thickener, e.g. the belt in case of a gravity belt thickener. The wash water is for example supplied via a washing supply line and e.g. a spray bar with several nozzles. During practical use these nozzles can block which reduces the effectiveness of cleaning the belt causing the belt to "blind". This can reduce the effectiveness of thickening which results in a lower dry substance content as thin sludge flows over the belt and the discharge pump has to handle more capacity which means that the discharge pump has to run longer in order to empty the hopper from the first level to the second level and the time taken to fill the hopper is reduced. The invention is based on the idea that measurement of the time to empty the hopper also can be used to monitor problems within the water supply. In order to improve this method preferably a pressure meter is adapted to or integrated in the washing line. By evaluating not only the fill and/or discharge time of the hopper but also the pressure within the wash water supply line it is possible to locate the problems to the region of the wash water supply. Any detection of a problem within the wash water supply ca be reacted to by appropriate action, e.g. nozzle cleaning or replacement.

As already explained, variations in the time for filling and/or emptying the hopper can have different reasons but are generally connected to performance variations within the belt thickener which are for example caused by varying performance of the polymer feed and/or of the wash water supply. Moreover variations of the fill and/or discharge time can be created by variations in the pump performance of the discharge pump which are for example caused by wear of the discharge pump or their components. This effect can be also verified by additionally comparing the measured data with characteristic data of the pump.

According to a second aspect, the invention relates to a method for monitoring the performance of a plant described above. The method is defined by the steps
- measuring the feed flow rate of the flowable medium,
- measuring the time taken to empty the discharge hopper from a first upper level to a second lower level during operation of the discharge pump and/or the time taken to fill the discharge hopper from a second lower level to a first upper level (during off time of the discharge pump), and
- calculating the discharge flow rate using the measured time(s) and the discharge volume of the hopper, e.g. using an evaluating unit and/or an evaluating algorithm which can be stored on an evaluating unit.

Preferably the volume reduction of the medium is determined from the feed flow rate and the discharge flow rate.

During operation of the plant (and during monitoring of the plant) the feed pump is running continuously and the thickener also is running continuously. However, the discharge pump is not running continuously but in a start/stop mode. It is started at the first level of the medium within the hopper and stopped at the second level of the medium within the hopper so that the runtime of the discharge pump corresponds to the discharge time. The "off-time" of the discharge pump corresponds to the filling time of the hopper.

As already described a conditioning medium (e.g. polymer) is supplied to the thickener or to the feed line and preferably the flow rate and/or the pressure within the conditioning line are monitored. Moreover preferably a washing medium (e.g. water) is supplied to the thickener via a washing line, wherein preferably the pressure within the washing line is monitored.

It is also possible to monitor the performance of the discharge pump by evaluating the measured data and comparing the data with stored pump characteristic data (for a new pump).

In conclusion, the invention allows for effective monitoring of the performance of the plant, in particular the performance of the thickener, influenced by several factors and potential hurt points. The inventive measures in particular allow for easy determination of root cause for the increase of time to fill and/or empty the hopper which is preferably detected by measurement of the run time of the discharge pump. The invention allows for wear prediction on the feed pump and the discharge pump and/or for identification of the thickener performance. Evaluation of the calculated flow rate in combination with the discharge pressure and comparison with the pump characteristic curve allow for careful evaluation of any hurt points: a lower discharge pressure indicates a lower dry substance content. A reduction in the hopper fill time (discharge pump off time) indicates a lower DS (dry substance content). After this evaluation ancillary details are reviewed, e.g. the parameters within the wash water supply and/or the polymer supply in order to identify cause of decreased or increased run time. Moreover a longer run time without increase in sludge feed volume indicates wear on the discharge pump.

Generally it is possible to evaluate the data with an evaluating unit located within the plant and therefore within the production site. The monitoring unit can e.g.be integrated in or adapted to the control unit/ control center of the plant, e.g. to the control center of the waste water treatment plant.

However, in a preferred embodiment the evaluating unit to which the data measured within the site is transferred, can be located outside the plant. It is e.g. possible to use a gateway or pump gateway, generally used for transfer of pump data, to transfer the plant performance data to an external server, e.g. a cloud server. In this case an i/o module connected to the detectors of the plant is e.g. connected to the gateway.

In the following we describe practical examples of evaluation with a typical monitoring procedure covered by the invention. As described above the thickened sludge discharge pump off time and/or runtime is measured. This enables to calculate the flowrate taking into account the time to fill and/or empty the hopper, the volume of the hopper and the rate of change due to inflow. Moreover the running current can be calculated.

In a first practical case typically the system detects an increase in the discharge pump runtime. A typical value for the runtime of the discharge pump in order to empty the hopper is in the region of some minutes, for example approximately four minutes. The reason for an increase simply can be an increase in the sludge feed rate which is measured with the feed flow meter which indicates that the operator of the plant changed the process so that no further actions are necessary as the increase in the discharge time is not caused by performance problems. In this case generally the discharge pressure also increases.

However, if the system in case of an increase of discharge time also detects no increase in the feed flow rate and/or detects a decrease in the discharge pressure, this indicates problems within the system. In this case the system (e.g. the evaluating algorithm) checks the other parameters, in particular the polymer feed flow rate, the polymer pump discharge pressure, the belt wash water pressure and/or the performance of the discharge pump. A decrease in the polymer feed flow rate may for example indicate a blockage in the polymer injection pipework. An increase in the polymer discharge pressure may also indicate a blockage within the polymer injection pipework. An increase in the wash water pressure indicates problems with the wash water supply, e.g. the nozzles.

In a second practical case the system detects for example a decrease in the runtime of the discharge pump which starts corresponding checks within the evaluating algorithm not explained in detail.

In a preferred embodiment the evaluation algorithm analyses the measured data, e.g. continuously or quasi continuously, and/or calculates one or more performance parameters, e.g. sludge reduction ratio, outcome and/or cycle times.

The condition monitoring system for the thickener, e.g. gravity belt thickener, comprises several components that work together to provide accurate and timely information to end users. The system architecture may include:
- a physical system equipped with sensors: the thickener, e.g. gravity belt thickener and pumps as described before, preferably with sensors.
- a cloud based data storage: real time data from the thickener is transmitted and stored securely in the cloud. This data includes measurements from the thickener sensors, such as inflow rates.
- data analysis algorithm: an advanced algorithm implemented preferably in the cloud continuously analyses the data collected from the thickener. The algorithm calculates various performance parameters, including the sludge reduction ratio, outflow or cycle times.
- a cloud based monitoring service: the calculated performance parameters, including the sludge reduction ratio, are made available through a cloud based monitoring service. Users can access this service remotely via a web interface or a dedicated application.
- an alert configuration: within the cloud based monitoring service, users have the ability to define threshold values for the alert notification service. These thresholds can also be automatically set using an algorithm. They serve as the desired limits for the thickener operation within a specific time period. In the event that any of the parameters surpass the configured thresholds, the system will generate an alert.
- a notification system: the system includes a notification mechanism that sends alerts, e.g. e-mail alerts to designated users in case of threshold exceedance. The notifications ensure that the users are promptly informed about any deviations or malfunctions in the thickener performance.

In the following, the invention is explained in more detail referring to drawings which only show exemplary embodiments without restricting the scope of protection. In these drawings
- **Fig. 1**: shows an example of a plant and a method according to the invention and
- **Fig. 2**: shows a modified embodiment according to Fig. 1.

The figures schematically show a plant for increasing the dry substance content of a flowable medium S, whereas the flowable medium preferably is a sludge S that is for example produced during waste water treatment. The dry substance content of the sludge S is increased by dewatering of the sludge so that the volume of the sludge is decreased. The plant comprises a thickener 1 for dewatering the medium. In the shown embodiments the thickener 1 preferably is a gravity belt thickener 1 using gravity to thicken the sludge. This gravity belt thickener 1 works on the principle of separating liquid from solids by gravity drainage through a permeable belt (e.g. screen belt) which is in particular an endlessly circulating belt. Details are not shown in the figures as gravity belt thickeners are well-known in the state-of-the-art and the invention preferably uses these kind of gravity belt thickeners.

Moreover the plant comprises a feed pump 2 for feeding the medium to the thickener 1 whereas the feed pump 2 is connected to the inlet of the thickener 1 by a feed line 5. At the outlet of the thickener 1 the plant comprises a discharge pump 3 for discharging the thickened medium from the thickener 1. A discharge line 6 is connected to the outlet of the discharge pump 3.

In the embodiments shown in the figures, both, the feed pump 2 and the discharge pump 3 are progressive cavity pumps which are particularly designed for conveying liquid media with solid particles as for example sludge. However, these two pumps 2, 3 (i.e. a first pump and a second pump) are not necessarily identically designed but the discharge pump 3 may be designed for a lower or higher flow rate (or conveying capacity) than the feed pump 2.

Moreover, the plant is equipped with an additional system for feeding a conditioning medium, in particular a polymer P, to the sludge S fed to the thickener 1. Therefore, the figures show an additional (third) pump which is designated as conditioning pump 12 whereas this conditioning pump 12 is connected to the feed line 5 by another line or conduit which is designated as conditioning line 7. The conditioning line 7 is for example connected to the sludge feed line 5 by an injection system which could be an injection ring for injecting the conditioning medium (polymer P) to the sludge S within the sludge feed line 5. Therefore the sludge S is mixed with the polymer P resulting in flocculation of the sludge in order to optimise the thickening process within the gravity belt thickener 1.

The thickening process within the gravity belt thickener 1 is further improved by using wash water W as a washing medium which is for example supplied to the belt of the gravity belt thickener 1 by a spray bar or other means in order to clean the belt and therefore to optimise the thickening process. For this purpose a washing device 15 is connected to the thickener 1 by a washing line 16 which is for example connected to the spray bar (not shown) within the thickener 1.

A discharge hopper 4 is arranged at the inlet of the discharge pump 3 and therefore between the thickener 1 and the discharge pump 3 so that the thickened medium T is discharged from the thickener 1 to this hopper 4 using the discharge pump 3.

According to an important aspect of the invention the plant comprises a monitoring device for monitoring the performance of the plant, which includes monitoring of one or more components of the plant. The monitoring device comprises a feed flow meter 10 integrated in the sludge feed line 5 for measuring the feed flow rate of the sludge S from the feed pump 2 to the thickener 1. In order to monitor the performance of the gravity belt thickener 1, it is necessary to determine the feed flow rate at the inlet side of the thickener 1 as well as the discharge flow rate at the outlet of the thickener 1, as the sludge volume reduction and therefore the performance of the thickener 1 can be determined by comparison of the inlet flow rate and the outlet flow rate.

However, the invention works without an outlet flow meter arranged at the outlet of the thickener. Instead of this, the discharge flow rate is determined by using the discharge pump 3 and in particular the hopper 4 of the discharge pump 3. For this purpose, the monitoring device comprises means for measuring the time taken to empty the hopper 4 from a first upper level to a second lower level during operation of the discharge pump 3 and the time taken to fill the discharge hopper 4 from the second lower level to the first upper level and means for calculating the discharge flow rate of the thickener 1 using the measured time and the discharge volume of the hopper 4.

As shown in the figures, the means for measuring the time comprise two detection devices which are level probes 8, 9 or level sensors placed at or within the hopper in order to detect the first upper level and the second lower level. Using this level probes 8, 9, the monitoring device is able to measure the time taken to empty the discharge hopper 4 from the first level to the second level and/or the time taken to fill the discharge hopper from the second lower level to the first upper level and is moreover able to calculate the discharge flow rate using the volume of the hopper which means the discharge volume of the hopper 4 between the first upper level and the second lower level.

The monitoring device according to the invention therefore is able to determine the performance of the thickener 1 without additional sensors at the discharge end of the gravity belt thickener 1 and in particular without adding an additional flow rate sensor or dry solid meter at the discharge end. In other words, the invention works with a virtual flow meter realised by the discharge pump 3 and its discharge hopper 4 which is equipped with simple level probes and evaluating means.

The basic principle of the invention is therefore realised with only using the feed pump 2 and the discharge pump 3 and a flow meter 10 within the sludge feed line 5 without additional flow meters (or pressure meters), e.g. at the discharge end.

However, in a preferred embodiment further detection devices and sensors can be used in order to improve the monitoring procedure. The reason is that different effects or failures ("hurt points") can influence the performance of the gravity belt thickener 1. Using and evaluating additional sensors helps to distinguish the different sources of failures.

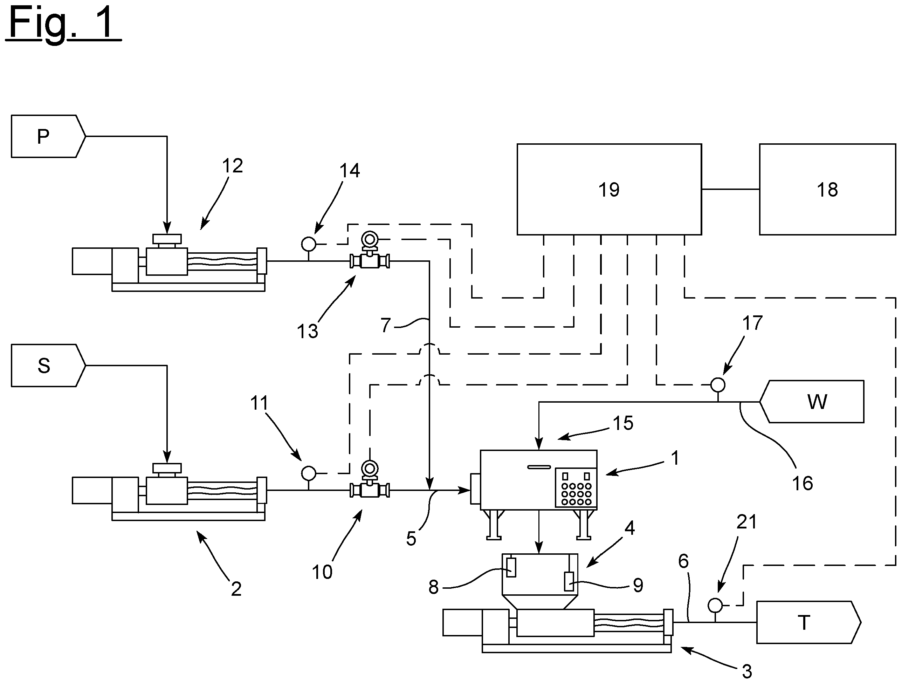

Therefore, in a preferred embodiment an additional pressure meter 11 is adapted to the sludge feed line 5. Moreover a pressure meter 21 is preferably adapted to the discharge line 6 at the outlet of the discharge pump 3. The figures also show that a flow meter 13 and/or a pressure meter 14 can be adapted to or integrated in the conditioning line 7 which is the polymer line. Finally, an additional pressure meter 17 is preferably adapted to the washing line 16 for supplying the wash water W to the gravity belt thickener. All of these detection devices are connected to an evaluating unit 18 (e.g. via a detection module, e.g. an I/O module 19) shown in Fig. 1. Moreover the pumps 2, 3 (or pump controls) or at least the outlet pump 3 can be connected to the monitoring and evaluating unit 18 as in particular the time taken to fill and empty the hopper 4 of the discharge pump 3 is important for evaluation.

During operation of the plant, the feed pump 2 and the thickener 1 are running continuously which means that sludge S is fed to the thickener 1 continuously and the thickener 1 continuously thickens the sludge and fills the hopper 4. The discharge pump 3 is operated "non-continuously" in a start/stop mode. It starts if the hopper 4 is fully loaded which is detected by the first level probe 8 and stops as the hopper is empty which is detected by the second level probe 9.

The evaluating unit 18 is preferably equipped with an evaluating algorithm which evaluates the measured data in the described manner.

Fig. 1 shows a first embodiment with an evaluating unit 18 which is located directly at the plant, for example in a control centre of the plant or waste water treatment plant.

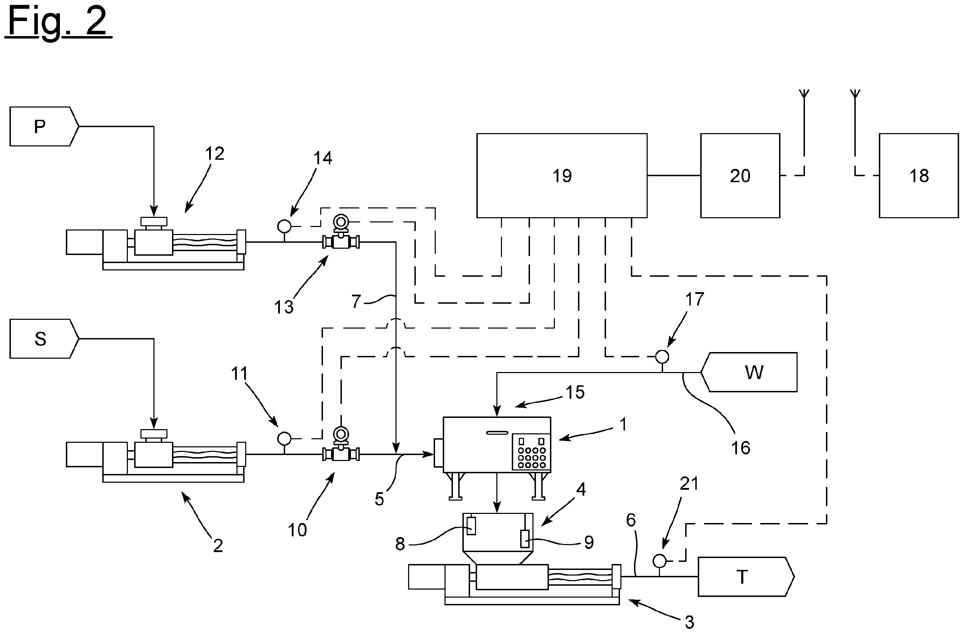

Fig. 2 shows a modified (preferred) embodiment in which the evaluating unit 18 is not located at the plant but outside the plant, for example at an external service location or at an external cloud server. For this purpose, the sensors which were already explained in connection with Fig. 1 are connected to a detection module 19, which can be a common i/o-module. The i/o-module 19 is for example connected to a communication module 20 which can be a gateway or the like for transferring the measured data to the evaluation unit 18 which is located at service location and/or a cloud server.

In both cases an algorithm for evaluating the measured data in the described manner is stored in the evaluating unit 18, which can be located at the plant site (Fig. 1) or at a service site or cloud server (Fig. 2).

## Claims

1. A plant for increasing the dry substance content of a flowable medium (S), for example sludge, the plant comprising
- a thickener (1) for thickening the medium (S),
- a feed pump (2) for feeding the medium (S) to the thickener (1),
- a discharge pump (3) for discharging the thickened medium (T) from the thickener (1),
- a discharge hopper (4) at the inlet of the discharge pump (3) or between the thickener (1) and the discharge pump (3), and
- a monitoring device for monitoring the performance of the plant,
the monitoring device comprising at least a feed flow meter (10) for measuring the feed flow rate from the feed pump (2) to the thickener (1) and
the monitoring device further comprising
- means for measuring the time taken to empty the hopper (4) from a first upper-level to a second lower level during operation of the discharge pump (3) and/or the time taken to fill the hopper (4) from a second lower level to a first upper level (e.g. off time of the discharge pump), and
- means (18) for calculating the discharge flow rate of the thickener (1) using the measured time(s) and the discharge volume of the hopper (4).

2. The plant according to claim 1, the means for measuring the time comprising one or more detection devices for detecting the first upper level and the second lower level of the medium within the hopper (4).

3. The plant according to claim 2, wherein the detection device or the detection devices is/are one or more level probes (8,9), or radar devices, ultrasonic devices or pressure devices.

4. The plant according to one of claims 1 to 3, with a feed line (5) from the feed pump (2) to the thickener (1), wherein the feed flow meter (5) is adapted to or integrated in the feed line (5).

5. The plant according to one of claims 1 to 4, with a discharge line (6) connected to the outlet of the discharge pump (3).

6. A plant according to one of claims 1 to 5, wherein a discharge pressure meter (21) for measuring the discharge pressure is adapted to or integrated in the discharge line (6) or the discharge pump (3).

7. A plant according to any of claims 1 to 6, moreover comprising a conditioning pump (12) for feeding a conditioning medium (P), for example a polymer (P), to the thickener (1) or to the feed line (5) via a conditioning line (7) connected e.g. to the feed line (5).

8. The plant according to claim 7, wherein a flow meter (13) and/or a pressure meter (14) is/are adapted to or integrated in the conditioning line (7).

9. The plant according to one of claims 1 to 8, further comprising a washing device (15) for supplying a washing medium (W), for example wash water, to the thickener (1), e.g. via a washing line (16) and preferably a spray bar or the like.

10. The plant according to claim 9, wherein a pressure meter (17) is adapted to or integrated in the washing line (16).

11. The plant according to one of claims 1 to 10, wherein the monitoring device further comprises an evaluating unit (18) to which the feed flow meter (10), the feed pressure meter (11), the detection devices (8,9), the discharge pressure meter (21), the conditioning flow meter (13), the conditioning pressure meter (14) and/or the washing pressure meter (17) and/or the discharge pump is/are preferably connected.

12. The plant according to one of claims 1 to 11, wherein the thickener (1) is a mechanical thickening device, e.g. a gravity belt thickener with an endlessly circulating permeable belt on which the medium (S) is transported in order to reduce the liquid content of the medium through the belt.

13. The plant according to one of claims 1 to 12, wherein the feed pump (2) and/or the discharge pump (3) is/are progressive cavity pump(s).

14. The plant according to one of claims 1 to 13, wherein the feed pump (2) and the discharge pump (3) are designed for or running with identical or different flow rates or conveying capacities, whereas the discharge pump is e.g. designed for a lower or a higher flow rate than the feed pump.

15. A method for monitoring the performance of a plant according to one of claims 1 to 14, by
measuring the feed flow rate of the flowable medium,
measuring the time taken to empty the discharge hopper from a first upper-level to a second lower level during operation of the discharge pump and/or measuring the time taken to fill the hopper from a second lower level to a first upper level, and
calculating the discharge flow rate using the measured time(s) and the discharge volume of the hopper, e.g. using an evaluating algorithm.

16. The method according to claim 15, further determining the volume reduction of the medium from the measured feed flow rate and the calculated discharge flow rate.

17. The method according to claims 15 or 16, wherein the feed pump and/or the thickener is/are running continuously during monitoring and the discharge pump is running in a start/stop mode.

18. The method according to claim 17, wherein the discharge pump starts and stops depending on the detected levels of the medium within the discharge hopper and the time taken to empty the hopper preferably is the running time of the discharge pump and/or the time taken to fill the hopper preferably is the off time of the discharge pump.

19. The method according to one claims 15 to 18, wherein a conditioning medium is supplied to thickener or preferably to the feed line and preferably the flow rate and/or the pressure within the conditioning line are monitored.

20. The method according to one of claims 15 to 19, wherein a washing medium is supplied to the thickener, e.g. via a washing line, wherein preferably the pressure within the washing line is monitored.

21. The method according to one of claims 15 to 20, wherein the performance of the discharge pump is monitored by evaluating the measured data and comparing the data with stored pump characteristic data.

22. The method according to one of claims 15 to 21, wherein measured data is transferred, e.g. via internet, to an evaluating unit which is for example located outside the plant, e.g. at a cloud server.

23. The method according to one of claims 15 to 22, using an evaluating algorithm preferably stored at the evaluating unit.

24. The method according to one of claims 21 to 23, whereas the evaluation algorithm analyses the measured data, e.g. continuously or quasi continuously, and/or calculates one or more performance parameters, e.g. the sludge reduction ratio, outflow and/or cycle times.

25. The method according to one of claims 21 to 24, whereas the measured data and/or the calculated performance parameters are made available to a user or a user device, e.g. through a cloud based monitoring service.

26. The method according to one of claims 21 to 25, whereas the evaluation unit or a cloud based monitoring device create an alert notification sending it to a user, whereas preferably users have the possibility to define threshold values for the alert notification service.
